# EUROPÄISCHE PATENTANMELDUNG

(11) **EP 3 520 881 A1**
(43) Veröffentlichungstag der Anmeldung: **07.08.2019**
(21) Anmeldenummer: 18020044.6
(22) Anmeldetag: 31.01.2018
(51) Int. Cl.: B01D 53/04

(54) **VERFAHREN ZUR TRENNUNG EINES GASGEMISCHSTROMS MITTELS TEMPERATURWECHSELADSORPTION UND TEMPERATURWECHSELADSORPTIONSANLAGE**

(71) Anmelder: Linde Aktiengesellschaft, 80331 München (DE)
(72) Erfinder: Ried, Thomas, 80797 München (DE); Schürer, Benedikt, 82049 Pullach (DE); Duarte, Gabriel Salazar, 80336 München (DE)

(57) **Zusammenfassung**

Die Erfindung betrifft ein Verfahren zur Trennung eines Gasgemischstroms, bei dem eine Temperaturwechseladsorptionsanlage (100) verwendet wird, die eine Anzahl von Adsorptionseinheiten (A1, A2, A3) aufweist, die jeweils in einer ersten Betriebsart und einer zweiten Betriebsart betrieben werden, wobei die erste Betriebsart umfasst, den Gasgemischstrom (G) zumindest teilweise durch einen Adsorptionsraum der jeweiligen Adsorptionseinheit (A1, A2, A3) zu führen und einem adsorptiven Stoffaustausch mit wenigstens einem Adsorbens in deren Adsorptionsraum zu unterwerfen, und die zweite Betriebsart umfasst, einen ersten Wärmeträgerfluidstrom (W1) auf einem ersten Temperaturniveau durch eine Wärmetauschanordnung der jeweiligen Adsorptionseinheit (A1, A2, A3) zu führen und Wärme von dem ersten Wärmeträgerfluidstrom (W1) indirekt auf das wenigstens eine Adsorbens in deren Adsorptionsraum zu übertragen. Es ist vorgesehen, dass die erste Betriebsart umfasst, einen zweiten Wärmeträgerfluidstrom (W2) auf einem zweiten Temperaturniveau durch die Wärmetauschanordnung der jeweiligen Adsorptionseinheit (A1, A2, A3) zu führen und Wärme von dem wenigstens einen Adsorbens in deren Adsoroptionsraum indirekt auf den zweiten Wärmeträgerfluidstrom (W1) zu übertragen, und die Adsorptionseinheiten (A1, A2, A3) jeweils in einer dritten Betriebsart betrieben werden, die umfasst, einen dritten Wärmeüberträgerfluidstrom (W3) auf einem dritten Temperaturniveau durch die Wärmetauschanordnung der jeweiligen Adsorptionseinheit (A1, A2, A3) zu führen und Wärme von dem wenigstens einen Adsorbens in deren Adsorptionsraum auf den dritten Wärmeträgerfluidstrom (W3) zu übertragen. Eine entsprechende Temperaturwechseladsorptionsanlage (100) ist ebenfalls Gegenstand der Erfindung.

## Beschreibung

Die Erfindung betrifft ein Verfahren zur Trennung eines Gasgemischstroms mittels Temperaturwechseladsorption und eine zur Durchführung eines derartigen Verfahrens eingerichtete Temperaturwechseladsorptionsanlage gemäß den jeweiligen Oberbegriffen der unabhängigen Patentansprüche.

### Stand der Technik

Bei der Temperaturwechseladsorption (TSA, Temperature Swing Adsorption) handelt es sich um ein adsorptives Verfahren zur Trennung von Gasgemischen, bei dem die Regenerierung des verwendeten Adsorbens unter Einsatz von thermischer Energie erfolgt. Die Temperaturwechseladsorption wird beispielsweise zur Abgasreinigung oder zur Aufbereitung von Gasgemischen wie Erd- oder Synthesegas verwendet. Auch andere Gasgemische können mittels Temperaturwechseladsorption in entsprechender Weise getrennt werden, beispielsweise Gasgemische wie Biogas oder Abgase aus chemischen oder physikalischen Gaswäscheverfahren wie der Rectisol- oder Aminwäsche, sofern sie sich in ihrer Zusammensetzung für eine entsprechende Trennung eignen. Die vorliegende Erfindung ist nicht auf die Verwendung bestimmter Adsorbentien bzw. Gasgemische beschränkt.

Die Temperaturwechseladsorption macht sich die Temperaturabhängigkeit von Adsorptionsvorgängen zunutze. Ein Adsorbens, das in einem geeigneten Adsorberbehälter (hier als "Adsorptionseinheit" bezeichnet) untergebracht ist, wird dabei in einem Betriebstakt auf einem niedrigeren Temperaturniveau mit dem zu trennenden Gasgemischstrom durchströmt und hierbei mit der oder den jeweils abzutrennenden Komponenten aus dem Gasgemischstrom beladen. In einem nachfolgenden Betriebstakt kann das Adsorbens dann durch Erwärmen, d.h. Einbringen thermischer Energie, von dieser oder diesen Komponenten weitgehend befreit und auf diese Weise "regeneriert" werden. Für den kontinuierlichen Betrieb einer Temperaturwechseladsorptionsanlage sind daher mindestens zwei Adsorptionseinheiten erforderlich, damit stets eine der Adsorptionseinheiten mit dem zu trennenden Gasgemischstrom durchströmt und damit zur Trennung des Gasgemischstroms verwendet werden kann.

Die Temperaturwechseladsorption kann insbesondere in Stoffsystemen mit Komponenten eingesetzt werden, die hohe Adsorptionsenthalpien aufweisen. Die Taktzeiten der erläuterten Betriebstakte betragen in der Regel mehrere Stunden. Die Temperaturwechseladsorption wird generell zur Entfernung niedrig konzentrierter Komponenten in Gasgemischen eingesetzt und eignet sich typischerweise weniger zur Entfernung höher konzentrierter Komponenten.

In klassischen Anlagen zur Temperaturwechseladsorption wird ein sogenanntes Regeneriergas in erwärmter Form direkt über das Adsorbens geleitet. Das Regeneriergas nimmt dabei die zuvor adsorbierten und nun aufgrund der Temperaturerhöhung desorbierenden Komponenten auf. Bei dem Regeneriergas kann es sich beispielsweise um ein gereinigtes Verfahrensprodukt, Wasserdampf oder Stickstoff handeln. Auch die Verwendung anderer Regeneriergase ist möglich.

Alternativ zur Verwendung eines Regeneriergases, das in direkten Kontakt mit dem Adsorbens kommt, kann auch eine indirekte Beheizung des Adsorbens zu dessen Regeneration vorgenommen werden. Hierzu kann ebenfalls ein erwärmter Fluidstrom eingesetzt werden, der jedoch beispielsweise mittels Heizleitungen durch das Adsorbens bzw. ein Adsorberbett geführt wird. Ein entsprechendes Fluid wird hier auch als "Wärmeträgerfluid" bezeichnet. Ein Wärmeträgerfluid ist im hier verwendeten Sprachgebrauch also eine Flüssigkeit oder ein Gas, das beim indirekten Heizen und/oder Kühlen eines Adsorbers durch einen getrennten Strömungskanal geführt wird und auf diese Weise einem indirekten Wärmetausch mit dem Adsorbens unterworfen wird. Als Wärmeträgerfluid in Temperaturwechseladsorptionsanlagen kann beispielsweise Wasser, Thermalöl, Dampf oder heißer Stickstoff verwendet werden.

Aus der US 7,744,677 B2 und der US 8,025,720 B2 sind jeweils Verfahren zur Bearbeitung von Gasgemischströmen durch Temperaturwechseladsorption bekannt, in denen eine Adsorptionsanlage mit drei Adsorptionseinheiten eingesetzt wird. Es erfolgt eine Wärmeintegration zwischen Heiz- und Kühlschritten. Die US 9,272,963 B2 schlägt ein entsprechendes Verfahren vor, bei dem jedoch zwei Adsorptionseinheiten verwendet werden, wobei ebenfalls eine Wärmeintegration vorgenommen wird und Speichertanks sowie Erhitzer mit einem großen Speichervolumen für ein in dem Verfahren eingesetztes Wärmeträgerfluid verwendet werden.

Die US 6,630,012 B2 und die US 6,974,496 B2 offenbaren jeweils Verfahren zur Gastrennung mittels indirekt beheizter Adsorption und thermisch unterstützter Druckwechseladsorption auf Grundlage eines sogenannten Mikrokanal-Wärmetauschers. Die US 2003/0037672 A1 offenbart ein indirekt beheiztes Temperaturwechseladsorptionsverfahren mit einem Rohrbündelwärmeübertrager, wobei ein Adsorbens in den Rohren bereitgestellt ist.

Grundsätzlich besteht bei Temperaturwechseladsorptionsverfahren und entsprechenden Anlagen der Bedarf nach Maßnahmen, die den Energieverbrauch und insbesondere die Energieverluste verringern.

### Offenbarung der Erfindung

Vor diesem Hintergrund schlägt die vorliegende Erfindung ein Verfahren zur Trennung eines Gasgemischstroms mittels Temperaturwechseladsorption und eine zur Durchführung eines derartigen Verfahrens eingerichtete Temperaturwechseladsorptionsanlage mit den Merkmalen der unabhängigen Patentansprüche vor. Bevorzugte Ausgestaltungen sind Gegenstand der abhängigen Patentansprüche sowie der nachfolgenden Beschreibung.

Vor der Erläuterung der Merkmale und Vorteile der vorliegenden Erfindung werden noch einige Grundlagen und die verwendeten Begriffe erläutert.

Flüssige und gasförmige Gemische können im hier verwendeten Sprachgebrauch reich oder arm an einer oder mehreren Komponenten sein, wobei "reich" für einen Gehalt von wenigstens 99%, 99,5%, 99,9%, 99,99%, 99,999% oder 99,9999% und "arm" für einen Gehalt von höchstens 1 %, 0,1 %, 0,01 %, 0,001 %, 0,0001 oder 0,00001 % auf molarer, Gewichts- oder Volumenbasis stehen kann. Der Begriff "überwiegend" kann der Definition von "reich" entsprechen.

Komponentengemische können im hier verwendeten Sprachgebrauch ferner angereichert oder abgereichert an einer oder mehreren Komponenten sein, wobei sich diese Begriffe auf einen entsprechenden Gehalt in einem anderen Komponentengemisch beziehen, unter Verwendung dessen das betrachtete Komponentengemisch gebildet wurde. Ein Komponentengemisch ist dabei gemäß dem hier verwendeten Sprachgebrauch "angereichert", wenn es zumindest den 10-fachen, 100-fachen oder 1.000-fachen Gehalt der bezeichneten Komponente(n) aufweist, und es ist "abgereichert", wenn es höchstens den 0,1-fachen, 0,01-fachen oder 0,001-fachen Gehalt der bezeichneten Komponente(n) aufweist.

Die vorliegende Anmeldung verwendet zur Charakterisierung von Drücken und Temperaturen die Begriffe "Druckniveau" und "Temperaturniveau", wodurch zum Ausdruck gebracht werden soll, dass entsprechende Drücke und Temperaturen in einer entsprechenden Anlage nicht in Form exakter Druck- bzw. Temperaturwerte verwendet werden müssen, um das erfinderische Konzept zu verwirklichen. Jedoch bewegen sich derartige Drücke und Temperaturen typischerweise in bestimmten Bereichen, deren Maximal- und Minimalwerte sich um beispielsweise nicht mehr als 1%, 5%, 10%, 20% oder sogar 50% unterscheiden.

Entsprechende Druckniveaus und Temperaturniveaus können dabei in disjunkten Bereichen liegen oder in Bereichen, die einander überlappen. Insbesondere schließen beispielsweise Druckniveaus unvermeidliche oder zu erwartende Druckverluste ein. Entsprechendes gilt für Temperaturniveaus.

### Vorteile der Erfindung

Die vorliegende Erfindung stellt ein Temperaturwechseladsorptionsverfahren und eine entsprechende Anlage bereit, bei der mehrere, insbesondere drei oder wenigstens drei, Adsorberbehälter bzw. Adsorptionseinheiten verwendet werden, die jeweils zumindest teilweise mit Adsorbens, beispielsweise in Form von Granulen oder Formkörpern, gefüllt sind. Diese Adsorptionseinheiten sind dabei im Rahmen der vorliegenden Erfindung durch indirekten Wärmetausch beheizbar, d.h. sie sind mittels eines Fluids durchströmbar, das nicht direkt mit dem jeweiligen Adsorbens in Kontakt kommt, jedoch Wärme mitdem Adsorbens austauschen kann. Wie auch nachfolgend erläutert, können die Adsorptionseinheiten beispielsweise in Form von Rohrbündelanordnungen bereitgestellt werden, wobei die Rohre, die eine entsprechende Rohrbündelanordnung bilden, mit Adsorbens gefüllt sind und die Rohre von dem jeweiligen Wärmeträgerfluidstrom umströmt werden oder umgekehrt.

Der besseren Unterscheidbarkeit halber wird nachfolgend ein Bereich einer Adsorptionseinheit, in dem ein Adsorbens untergebracht ist, als "Adsorptionsraum" bezeichnet. Der Adsorptionsraum muss dabei nicht kontinuierlich ausgebildet sein, sondern kann sich auch beispielsweise auf mehrere Rohre einer Rohrbündelanordnung verteilen, wie zuvor erläutert. Auch andersartige Unterteilungen eines Adsorptionsraums sind möglich. Ein Adsorptionsraum einer Adsorptionseinheit ist, mit anderen Worten, das Volumen, das mit einem Adsorbens versehen ist. Es versteht sich, dass wenn hier davon die Rede ist, dass "ein" Adsorbens verwendet wird bzw. dass ein Adsorptionsraum mit "einem" Adsorbens gefüllt ist, dies nicht ausschließt, dass im Rahmen der vorliegenden Erfindung auch mehrere unterschiedliche Typen desselben Adsorbens oder mehrere unterschiedliche Adsorbentien in einem Adsorptionsraum verwendet werden können.

Ferner ist nachfolgend angegeben, dass die verwendeten Adsorptionseinheiten jeweils eine "Wärmetauschanordnung" aufweisen. Eine derartige Wärmetauschanordnung ist dabei im Rahmen der vorliegenden Erfindung zur indirekten Wärmeübertragung zwischen einem Wärmeträgerfluidstrom und dem Adsorbens ausgebildet. Beispielsweise wird im Falle einer erläuterten Rohrbündelanordnung die indirekte Wärmeübertragung über die Wandungen der die Rohrbündel bildenden Rohre hinweg vorgenommen und die Wärmetauschanordnung damit durch die Rohre bzw. deren Wandungen gebildet. Auf diese Weise ist sichergestellt, dass das Adsorbens nicht in direkten Kontakt mit dem jeweiligen Wärmeträgerfluidstrom kommt.

Im Rahmen der vorliegenden Erfindung wird zur Entfernung einer oder mehrerer Komponenten aus einem Gasgemischstrom eine Temperaturwechseladsorption vorgenommen, wobei, wie grundsätzlich in den entsprechenden Verfahren bekannt, typischerweise stets eine oder mehrere Adsorptionseinheiten von dem entsprechend zu behandelnden Gasgemischstrom durchströmtwerden. Durch die Verwendung mehrerer Adsorptionseinheiten ist es möglich, dass gleichzeitig dazu ein oder mehrere andere Adsorberbehälter bzw. Adsorptionseinheiten regeneriert werden können. Es ist jedoch auch möglich, dass in bestimmten Zeiträumen mehrere Adsorptionseinheiten parallel von dem zu behandelnden Gasgemischstrom durchströmt werden und dabei keine zeitgleiche Regeneration einer oder mehrerer anderer Adsorptionseinheiten erfolgt. Es versteht sich auch, dass insbesondere während kurzer Zeiträume, insbesondere während eines Umschaltens zwischen unterschiedlichen Adsorptionseinheiten, eine Durchströmung auch vollständig unterbleiben kann.

Bekanntermaßen umfassen entsprechende Regenerationsmaßnahmen neben einer Aufheizung zur Desorption der adsorbierten Komponenten auch insbesondere eine Abkühlung nach der Desorption, damit ein entsprechender Adsorberbehälter bzw. eine Adsorptionseinheit, genauer das hierin befindliche Adsorbens, anschließend auf einem Temperaturniveau zur Verfügung steht, das sich zur Adsorption von Komponenten aus dem zu behandelnden Gasgemischstrom eignet. Ferner umfassen entsprechende Regenerationsmaßnahmen gemäß dem Stand der Technik typischerweise ein Spülen des Adsorbens, um desorbierte Komponenten möglichst weitgehend zu entfernen.

Im Rahmen der vorliegenden Erfindung erfolgt ein Aufheizen und ein Abkühlen des Adsorbens bei der Regeneration bzw. anschließend an die Regeneration, aber auch ein Abkühlen des Adsorbens während eines Adsorptionsvorgangs, insbesondere um auf diese Weise Adsorptionswärme abzuführen. Die Erwärmung und Abkühlung wird dabei stets mittels indirekter Wärmeübertragung vorgenommen, wie nachfolgend erläutert. Zur Minimierung des Energiebedarfs hat sich dabei die Verwendung von mehreren Pufferbehältern, insbesondere mindestens zwei Pufferbehältern, als besonders vorteilhaft herausgestellt, von denen einer oder zumindest einer in einem warmen und einer oder zumindest einer in einem kalten Wärmeträgerkreislauf bereitgestellt ist. Es können auch weitere Pufferbehälter vorgesehen sein, die insbesondere auf einem oder mehreren Temperaturniveaus zwischen jenen der zuvor genannten Pufferbehälter betrieben werden. Die verwendeten Pufferbehälter können insbesondere mit variablem Fluidstand betrieben werden.

Vorteilhafterweise umfasst die vorliegende Erfindung, zu Beginn des Heizens zur Regeneration dem oder den entsprechenden Adsorptionseinheiten ein Wärmeüberträgerfluid bzw. einen entsprechenden Wärmeträgerfluidstrom mit erhöhter Temperatur aus dem warmen Pufferbehälter oder einem Pufferbehälter mit mittlerer Temperatur zuzuführen. Dabei verlässt das Wärmeträgerfluid, das sich zu Beginn der Regeneration noch in dem oder den Adsorptionsbehältern bzw. Adsorptionseinheiten befindet, aber auch zu Beginn der Regeneration noch vergleichsweise stark kalt abkekühltes Wärmeträgerfluid den oder die Adsorptionsbehälter bzw. Adsorptionseinheiten zunächst auf der Austrittsseite mit noch deutlich kälterer Temperatur. Dieser Wärmeträgerfluidstrom wird daher vorteilhafterweise zunächst in den oder die Pufferbehälter bzw. den Kreislauf für kaltes Wärmeträgerfluid eingespeist. Dies ist insbesondere auch unter Bezugnahme auf die erfindungsgemäßen Ausführungsformen, die in den Figuren veranschaulicht sind, noch im Detail dargestellt. Eine entsprechende Einspeisung erfolgt vorteilhafterweise solange, bis die Temperatur des Wärmeträgerfluids am Austritt des oder der Adsorberbehälter bzw. Adsorptionseinheiten auf einen festgelegten Wert angestiegen ist. Ist dies der Fall, wird das austretende Wärmeträgerfluid stattdessen in den warmen Kreislauf bzw. einen entsprechenden Pufferbehälter eingespeist.

Alternativ zu den soeben erläuterten Maßnahmen kann im Rahmen der vorliegenden Erfindung auch eine zumindest teilweise, insbesondere eine vollständige, Mischung von Wärmeträgerfluidströmen, die aus unterschiedlichen Adsorberbehältern bzw. Adsorptionseinheiten mit unterschiedlichen Temperaturen austreten, erfolgen. Ein auf diese Weise gebildetes gemischtes Wärmeträgerfluid kann bei einem mittleren Temperaturniveau erhalten werden. Es kann insbesondere anschließend aufgeteilt werden, wobei ein Teil erhitzt und zum Heizen eines oder mehrerer Behälter bzw. Adsorptionseinheiten verwendet und ein anderer Teil gekühlt und zum Kühlen eines oder mehrerer Adsorberbehälter bzw. Adsorptionseinheiten verwendet werden kann. Ein entsprechendes Mischen kann durch einfaches Zusammenführen in einer Sammelleitung erfolgen, oder es kann ein Pufferbehälter bereitgestellt werden, in den unterschiedliche Wärmeträgerfluidströme eingespeist und dort vermischt werden.

Die vorliegende Erfindung schlägt insgesamt ein Verfahren zur Trennung eines Gasgemischstroms mittels Temperaturwechseladsorption vor, bei dem eine Temperaturwechseladsorptionsanlage mit mehreren Adsorptionseinheiten verwendet wird, die jeweils in einer ersten und einer zweiten Betriebsart betrieben werden.

Die erste Betriebsart umfasst dabei, dass der Gasgemischstrom zumindest teilweise durch einen Adsorptionsraum der jeweiligen Adsorptionseinheit geführt und einem adsorptiven Stoffaustausch mit wenigstens einem Adsorbens in dem Adsorptionsraum der jeweiligen Adsorptionseinheit unterworfen wird. Diese Betriebsart entspricht also einem regulären Adsorptionsbetrieb, bei dem auch eine oder mehrere Adsorptionseinheiten parallel zum Einsatz kommen können.

Ferner wird in dem Verfahren in der zweiten Betriebsart ein erster Wärmeträgerfluidstrom auf einem ersten Temperaturniveau durch eine Wärmetauschanordnung in der jeweiligen Adsorptionseinheit geführt und Wärme wird von dem ersten Wärmeträgerfluidstrom indirekt auf das wenigstens eine Adsorbens in dem Adsorptionsraum der jeweiligen Adsorptionseinheit übertragen. Das erste Temperaturniveau liegt dabei zumindest zeitweise oberhalb eines Temperaturniveaus, auf dem das wenigstens eine Adsorbens in der zweiten Betriebsart vorliegt. Die zweite Betriebsart entspricht also einem Heizen der entsprechenden Adsorptionseinheit und damit einem Regenerationsbetrieb bzw. einer eresten Phase hiervon. In der zweiten Betriebsart wird im Gegensatz zur ersten Betriebsart der Gasgemischstrom oder ein Teil hiervon nicht durch den Adsorptionsraum der jeweiligen Adsorptionseinheit geführt. Mit anderen Worten wird in der zweiten Betriebsart kein adsorptiver Stoffaustausch vorgenommen, sondern eine Desorption adsorbierter Komponenten zur Regeneration des wenigstens einen Adsorbens durchgeführt.

Mit anderen Worten wird die erste Betriebsart zur adsorptiven Trennung des Gasgemischstroms oder eines Teils hiervon verwendet, wobei adsorbierbare Komponenten an das jeweilige Adsorbens adsorbieren. Die hier als zweite Betriebsart bezeichnete Betriebsart wird hingegen zur Regenerierung verwendet. Es versteht sich, dass die Betriebsarten der unterschiedlichen Adsorptionseinheiten dabei in dem erfindungsgemäßen Verfahren in geeigneter Weise aufeinander abgestimmt werden. Insbesondere wird dabei vorteilhafterweise stets zumindest eine Adsorptionseinheit in der ersten Betriebsart betrieben, so dass stets eine adsorptive Trennung durchgeführt werden kann. Parallel dazu können jeweils eine oder mehrere andere Adsorptionseinheiten in der zweiten Betriebsart betrieben werden. Dies entspricht einem Wechselbetrieb unterschiedlicher Adsorptionseinheiten, wie sie zuvor erläutert wurde und aus dem Bereich der Adsorptionstechnik grundsätzlich bekannt ist. Die Anzahl der jeweils in den unterschiedlichen Betriebsarten betriebenen Adsorptionseinheiten richtet sich dabei nach der Gesamtzahl vorhandener Adsorptionseinheiten und ist grundsätzlich nicht beschränkt.

Erfindungsgemäß umfasst die erste Betriebsart ferner, dass ein zweiter Wärmeträgerfluidstrom auf einem zweiten Temperaturniveau durch eine Wärmetauschanordnung in der jeweiligen Adsorptionseinheit geführt wird und Wärme von dem wenigstens einen Adsorbens in dem Adsorptionsraum der jeweiligen Adsorptionseinheit indirekt auf den zweiten Wärmeträgerfluidstrom übertragen wird. Das zweite Temperaturniveau liegt dabei zumindest zeitweise unterhalb eines Temperaturniveaus, auf dem das wenigstens eine Adsorbens in der ersten Betriebsart vorliegt. Auf diese Weise kann, wie bereits angesprochen, Adsorptionswärme, abgeführt werden, die bei während des Adsorptionstakts, also in der ersten Betriebsart, in der jeweiligen Adsorptionseinheit frei wird.

Ferner ist im Rahmen der vorliegenden Erfindung vorgesehen, dass die Adsorptionseinheiten jeweils in einer dritten Betriebsart betrieben werden, die umfasst dass ein dritter Wärmeträgerfluidstrom auf einem dritten Temperaturniveau, das insbesondere auch dem zweiten Temperaturniveau entsprechen kann, durch die Wärmetauschanordnung der jeweiligen Adsorptionseinheit geführt wird und Wärme von dem wenigstens einen Adsorbens in dem Adsorptionsraum der jeweiligen Adsorptionseinheit indirekt auf den dritten Wärmeträgerfluidstrom übertragen wird. Das zweite Temperaturniveau liegt dabei zumindest zeitweise unterhalb eines Temperaturniveaus, auf dem das wenigstens eine Adsorbens in der dritten Betriebsart vorliegt. Die jeweilige Adsorptionseinheit bzw. das wenigstens eine Adsorbens hierin wird also mittels des dritten Wärmeträgerfluidstroms gekühlt, so dass die Adsorptionseinheit bzw. das wenigstens eine Adsorbens für nachfolgende Adsorptionsvorgänge auf geeigneter Temperatur zur Verfügung steht. In der dritten Betriebsart wird im Gegensatz zur ersten Betriebsart und wie in der zweiten Betriebsart der Gasgemischstrom oder ein Teil hiervon nicht durch den Adsorptionsraum der jeweiligen Adsorptionseinheit geführt. Mit anderen Worten wird auch in der dritten Betriebsart kein adsorptiver Stoffaustausch vorgenommen, sondern eine Abkühlung des wenigstens einen Adsorbens nach der Regeneration des wenigstens einen Adsorbens in der zweiten Betriebsart durchgeführt.

Erfindungsgemäß ist also vorgesehen, dass das wenigstens eine Adsorbens der jeweiligen Wärmetauscheinheit in der ersten Betriebsart gekühlt wird, dass das wenigstens eine Adsorbens der jeweiligen Wärmetauscheinheit in der zweiten Betriebsart erwärmt wird, und dass das wenigstens eine Adsorbens der jeweiligen Wärmetauscheinheit in der dritten Betriebsart wiederum gekühlt wird. Im Rahmen der vorliegenden Erfindung werden die erste, die zweite und die dritte Betriebsart dabei jeweils in der angegebenen Reihenfolge durchgeführt. Die erste, zweite und dritte Betriebsart erfolgen dabei, bezogen auf die jeweilige Adsorptionseinheit, in einander nicht überlappenden Zeiträumen.

Vorteilhafterweise umfassen die Adsorptionseinheiten wenigstens drei Adsorptionseinheiten, wobei zumindest während eines Betriebszeitraums eine der drei Adsorptionseinheiten in der ersten Betriebsart, zeitgleich eine weitere der drei Adsorptionseinheiten in der zweiten Betriebsart und zeitgleich eine weitere der drei Adsorptionseinheiten in der dritten Betriebsart betrieben werden kann.

Es sei betont, dass die vorliegende Erfindung nicht auf die Verwendung einer Temperaturwechseladsorptionsanlage mit einer bestimmten Anzahl an Adsorptionseinheiten beschränkt ist. Insbesondere kann auch eine parallele Adsorption mittels mehrerer Adsorptionseinheiten bzw. eine entsprechende parallele Gastrennung vorgesehen sein. Auch können jeweils mehrere Adsorptionseinheiten parallel regeneriert werden. Grundsätzlich sind die hierbei parallel verwendeten Betriebsarten jedoch dieselben.

Durch den Einsatz der vorliegenden Erfindung ergibt sich insbesondere eine Energieeinsparung durch eine Wärmeintegration im Vergleich zu indirekt beheizten Temperaturwechseladsorptionsanlagen, bei denen das Wärmeträgerfluid stets komplett aufgeheizt oder abgekühlt wird.

Die während der Adsorption von Gasen freiwerdende Energie führt zu einer Aufheizung des Adsorbens und somit zu einer Abnahme der erzielbaren Beladung. Durch ein Kühlen während der Adsorption, wie es erfindungsgemäß in der ersten Betriebsart durch die Verwendung des zweiten Wärmeträgerfluids vorgesehen ist, kann die erzielbare Beladung erhöht werden und somit die Arbeitskapazität des Adsorbens deutlich gesteigert werden. Unter der Arbeitskapazität eines Adsorbens versteht der Fachmann den Unterschied in der Beladung des Adsorbens nach der Adsorption und nach der Regeneration.

Ein weiterer Vorteil, der sich durch den Einsatz der vorliegenden Erfindung erzielen lässt, ist die Minimierung der Verluste an Produkt. Dieser Vorteil ergibt sich durch das indirekte Heizen und Kühlen, wobei nur geringe Mengen an Produktgas oder Einsatzgas oder auch gar kein Produktgas oder Einsatzgas zum Spülen während der Regenerationsphase verwendet werden. Im Gegensatz dazu werden bei konventionellen Temperaturwechseladsorptionsanlagen bzw. in den entsprechenden Verfahren größere Mengen an Regeneriergas zum Heizen und Kühlen benötigt. Werden hierbei Einsatz- oder Produktgas als Regeneriergas verwendet, kommt es deutlich zu höheren Produktverlusten.

Die erfindungsgemäßen Vorteile lassen sich insbesondere in einer bevorzugten Ausgestaltung der vorliegenden Erfindung erzielen, die umfasst, dass der in der zweiten Betriebsart verwendete erste Wärmeträgerfluidstrom auf dem ersten Temperaturniveau zumindest teilweise einem ersten Pufferbehälter entnommen und danach durch die Wärmetauschanordnung der jeweiligen Adsorptionseinheit geführt wird, dass der in der ersten Betriebsart verwendete zweite Wärmeträgerfluidstrom auf dem zweiten Temperaturniveau, das in diesem Fall unterhalb des ersten Temperaturniveaus liegt, zumindest teilweise einem zweiten Pufferbehälter entnommen und danach durch die Wärmetauschanordnung der jeweiligen Adsorptionseinheit geführt wird, und dass der in der dritten Betriebsart verwendete dritte Wärmeträgerfluidstrom auf dem dritten Temperaturniveau, das in diesem Fall dem zweiten Temperaturniveau entspricht, zumindest teilweise dem zweiten Pufferbehälter entnommen und danach durch die Wärmetauschanordnung der jeweiligen Adsorptionseinheit geführt wird. Mit anderen Worten schlägt die vorliegende Erfindung in dieser Ausgestaltung die Verwendung eines warmen und eines kalten Pufferbehälters vor, wobei der "erste" Pufferbehälter den warmen Pufferbehälter und der "zweite" Pufferbehälter den kalten Pufferbehälter darstellt.

Das erste Temperaturniveau, auf dem der erste (warme) Pufferbehälter betrieben wird, und auf dem der erste Wärmeträgerfluidstrom vorliegt, liegt in dieser Ausgestaltung der vorliegenden Erfindung insbesondere bei 50 bis 250°C, vorzugsweise bei 90 bis 220°C. Das zweite Temperaturniveau des zweiten (kalten) Pufferbehälters und damit des zweiten Wärmeträgerfluidstroms liegt hingegen in dieser Ausgestaltung insbesondere bei 0 bis 120°C, vorzugsweise bei 0 bis 90°C. Wie erwähnt, entspricht in dieser Ausgestaltung das dritte Temperaturniveau dem zweiten.

Wie bereits erläutert, kann durch den Einsatz der beiden Pufferbehälter für warmes und kaltes Wärmeträgerfluid bzw. durch die Schaffung entsprechender Fluidkreisläufe eine Energieeinsparung erzielt werden, wobei insbesondere auf ein Aufheizen stets des gesamten Wärmeträgerfluids verzichtet werden kann.

Vorteilhafterweise umfassen die erste und/oder die dritte Betriebsart zumindest teilweise einen ersten Zeitraum und einen nach dem ersten Zeitraum liegenden zweiten Zeitraum, die sich durch die Behandlung des jeweiligen Wärmeträgerfluidstroms unterscheiden, nachdem dieser durch die entsprechende Wärmetauscheinheit geführt wurde.

In einer ersten Ausgestaltung wird der erste Wärmeträgerfluidstrom, nachdem er in der zweiten Betriebsart durch die Wärmetauschanordnung der jeweiligen Adsorptionseinheit geführt wurde, in dem ersten Zeitraum zumindest teilweise dem zweiten Pufferbehälter zugeführt und in dem zweiten Zeitraum zumindest teilweise dem ersten Pufferbehälter zugeführt.

Der erste Wärmeträgerfluidstrom wird also, solange er noch vergleichsweise kalt ist, weil in der entsprechenden Adsorptionseinheit noch kälteres Wärmeträgerfluid vorliegt bzw. die Adsorptionseinheit insgesamt noch vergleichsweise kalt ist, vorteilhafterweise dem zweiten, "kalten" Pufferbehälter zugeführt. Auf diese Weise wird eine übermäßige Abkühlung des Wärmeträgerfluids in dem ersten Pufferbehälter vermieden. Hat der Wärmeträgerfluidstrom eine ausreichende Temperatur erreicht, kann er dem ersten Pufferbehälter zugeführt werden. Auf diese Weise verringert sich in der vorgeschlagenen Ausgestaltung der vorliegenden Erfindung der Energiebedarf, weil das Aufheizen von Wärmeträgerfluid reduziert werden kann.

Typischerweise wird der zweite Wärmeträgerfluidstrom, nachdem er in der ersten Betriebsart durch die Wärmetauschanordnung der jeweiligen Adsorptionseinheit geführt wurde, immer zumindest teilweise dem zweiten Pufferbehälter zugeführt. Es wird also keine unterschiedliche Einspeisung in einem ersten und einem zweiten Zeitraum vorgenommen, da die in der ersten Betriebsart freiwerdende Adsorptionswärme im Vergleich zur benötigten Energie zur Temperierung des gesamten Adsorbers (Stahlmasse und Adsorbens) wesentlich geringer ist. Dadurch resultiert nur eine geringe Erwärmung des Wärmeträgerfluids.

Im Rahmen der vorliegenden Erfindung kann hingegen alternativ oder zusätzlich zur entsprechenden Behandlung des ersten Wärmeträgerfluidstrom in dem ersten und dem zweiten Zeitraum vorgesehen sein, dass der dritte Wärmeträgerfluidstrom, nachdem er in der dritten Betriebsart durch die Wärmetauschanordnung der jeweiligen Adsorptionseinheit geführt wurde, in einem ersten Zeitraum zumindest teilweise dem ersten Pufferbehälter zugeführt wird und in einem zweiten Zeitraum zumindest teilweise dem zweiten Pufferbehälter zugeführt wird. Die entsprechenden, in der zweiten und dritten Betriebsart verwendeten ersten und zweiten Zeiträume können unabhängig voneinander nach Bedarf ausgewählt werden.

Die dritte Betriebsart wird, wie erwähnt, zur Abkühlung des Adsorbens nach einer vorigen Regeneration vorgenommen. Naturgemäß liegt dabei das Wärmeträgerfluid, das unmittelbar nach dem Ende der Heizphase der entsprechenden Adsorptionseinheit entnommen wird, noch auf einer hohen Temperatur vor. Diese würde daher einerseits die Temperatur in dem zweiten Pufferbehälter übermäßig erhöhen. Andererseits stellt die in dem dritten Wärmeträgerfluidstrom in dem ersten Zeitraum enthaltene Energie nutzbare Energie dar, die anderenfalls verloren ginge.

Gemäß einer besonders bevorzugten Ausgestaltung der vorliegenden Erfindung, die alternativ zu den zuvor erläuterten Ausführungsformen vorgesehen sein kann, werden hingegen der erste Wärmeträgerfluidstrom, nachdem er in dem zweiten Betriebsmodus durch die Wärmetauschanordnung der jeweiligen Adsorptionseinheit geführt wurde, und/oder der zweite Wärmeträgerfluidstrom, nachdem er in dem ersten Betriebsmodus durch die Wärmetauschanordnung der jeweiligen Adsorptionseinheit geführt wurde und/oder der dritte Wärmeträgerfluidstrom, nachdem er in dem dritten Betriebsmodus durch die Wärmetauschanordnung der jeweiligen Adsorptionseinheit geführt wurde, zumindest teilweise einer Vermischung zugeführt.

Auf diese Weise können im Rahmen der vorliegenden Erfindung Mischtemperaturen eingestellt werden, die sich für bestimmte Einsatzzwecke besonders gut eignen. Ferner können auf diese Weise auch Wärmeträgerfluidströme gebildet werden, die anschließend aufgeheizt oder abgekühlt und damit zur Regeneration bzw. Kühlung verwendet werden können. Insbesondere kann bei einer entsprechenden Vermischung das Wärmeträgerfluid bei einem mittleren Temperaturniveau aufgeteilt und zu einem Teil erhitzt und zum Heizen einer oder mehrerer Adsorptionseinheiten verwendet und zu einem anderen Teil gekühlt und zum Kühlen einer oder mehrerer Adsorptionseinheiten verwendet werden.

Im Rahmen der vorliegenden Erfindung kann die Vermischung dabei durch Zusammenführung der Fluidströme in eine Sammelleitung und/oder durch Einspeisen in einen Mischbehälter vorgenommen werden. Eine Einspeisung in einen Mischbehälter hat dabei den besonderen Vorteil, dass bei schwankenden Temperaturen ein Puffereffekt durch bereits in dem Mischbehälter vorliegendes Fluid erzielt werden kann und daher große Temperaturschwankungen vermieden werden.

Wie bereits erwähnt, können im Rahmen der vorliegenden Erfindung entsprechende Mischfluide auch als Wärmeträgerfluide verwendet werden, so dass eine besonders bevorzugte Ausgestaltung der vorliegenden Erfindung umfasst, einen oder mehrere bei der Vermischung gebildete Mischfluide zumindest teilweise bei einer Bildung des ersten und/oder des zweiten und/oder des dritten Wärmeträgerfluidstroms zu verwenden. Insbesondere kann, wie erwähnt, dabei eine Erwärmung und/oder Abkühlung von Teilen eines entsprechenden Mischfluids erfolgen.

Gemäß einer besonders bevorzugten Ausgestaltung des erfindungsgemäßen Verfahrens wird der Adsorptionsraum der jeweiligen Adsorptionseinheiten in der zweiten Betriebsart und/oder in der dritten Betriebsart zumindest zeitweise mit einem zirkulierenden Gasstrom durchströmt, der insbesondere mittels eines Gebläses befördert werden kann. Auf diese Weise lassen sich der Wärmeübergang verbessern und damit die Heiz- und Kühlzeiten verringern, weil lokale Temperaturmaxima und Temperaturminima vermieden werden können.

Gemäß einer weiteren bevorzugten Ausgestaltung des erfindungsgemäßen Verfahrens wird aus dem Adsorptionsraum der jeweiligen Adsorptionseinheiten zu Beginn der zweiten Betriebsart Gas abgezogen und in das Verfahren zurückgeführt. Die Rückführung kann insbesondere zu einer Adsorptionseinheit erfolgen, die sich zu diesem Zeitpunkt im Adsorptionsbetrieb, also der ersten Betriebsart, befindet.

Insbesondere kann im Rahmen der vorliegenden Erfindung auch vorgesehen sein, dass aus dem Adsorptionsraum der jeweiligen Adsorptionseinheiten während zumindest eines Teils der zweiten Betriebsart Gas ausgeführt und in einen Pufferbehälter überführt wird. Das während der Regeneration aus einer entsprechenden Adsorptionseinheit austretende Gas weist typischerweise starke Schwankungen im Volumenstrom und der Zusammensetzung auf. Ein ausreichend großer Pufferbehälter kann dazu genutzt werden, diese Schwankungen auszugleichen. Dabei wird optional am Austritt eines entsprechenden Pufferbehälters eine Klappe installiert, mittels derer ein aus dem Pufferbehälter austretender Volumenstrombei einem bestimmten Druck konstant gehalten werden kann. Dieser Druck ist dabei geringer als der minimale Druck des Gases, das während der Regeneration aus der Adsorptionseinheit ausströmt. Dementsprechend ergibt sich bei schwankendem Eintrittsstrom ein variierender Druck im Pufferbehälter.

Gemäß einer besonders bevorzugten Ausgestaltung der vorliegenden Erfindung weist der Gasgemischstrom einen Gehalt von 0,01 bis 20 Mol-%, insbesondere von 0,1 bis 10 Mol-%, an einer oder mehrerer bevorzugt an das wenigstens eine Adsorbens adsorbierender Komponenten und im verbleibenden Rest eine oder mehrere weniger stark an das erste, das zweite und das dritte Adsorbens adsorbierbare Komponenten auf. Die Frage, welche Komponenten "bevorzugt adsorbierende Komponenten" und welche Komponenten "weniger stark adsorbierende Komponenten" sind, richtet sich nach der Wahl des jeweils verwendeten Adsorbens. Grundsätzlich erfolgt dabei auch eine Adsorption der bevorzugt adsorbierenden Komponenten nicht vollständig. Auch ein geringer Teil der weniger stark adsorbierenden Komponenten adsorbiert an das entsprechene Adsorbens.

Beispiele für entsprechend behandelbare Gasgemische wurden bereits zuvor erläutert. Insbesondere können die eine oder die mehreren bevorzugt adsorbierenden Komponenten Kohlendioxid und/oder Wasser und/oder Kohlenwasserstoffe mit mehr als zwei oder mehr als drei Kohlenstoffatomen umfassen und die einen oder mehreren weniger stark adsorbierenden Komponenten können Wasserstoff und/oder Methan und/oder Kohlenmonoxid umfassen. In einer derartigen Ausgestaltung eignet sich das erfindungsgemäße Verfahren insbesondere zur Bearbeitung von methanreichen Gasen, beispielsweise Erdgas, Biogas oder Grubengas oder zur Bearbeitung von wasserstoffreichen Gasen wie Synthesegas.

Gemäß einer weiteren bevorzugten Ausgestaltung der vorliegenden Erfindung umfassen die eine oder die mehreren bevorzugt adsorbierenden Komponenten hingegen Wasser und/oder Kohlenwasserstoffe und die eine oder die mehreren weniger stark adsorbierenden Komponenten umfassen Kohlendioxid. In einer derartigen Ausgestaltung eignet sich das erfindungsgemäße Verfahren insbesondere zur Abtrennung von Wasser und/oder Kohlenwasserstoffen aus Gasgemischen, wie Biogas, Abgas aus Gaswäschen oder Aminwäschen oder Gasgemischen aus natürlichen Quellen wie Gruben oder Stollen und Gasfeldern.

Wie bereits erwähnt, können im Rahmen der vorliegenden Erfindung insbesondere Rohrbündelanordnungen in den Absorptionseinheiten eingesetzt werden. Eine besonders bevorzugte Ausgestaltung der vorliegenden Erfindung umfasst daher, dass die erste und/oder die zweite und/oder die zweite und/oder die dritte Adsorptionseinheit jeweils als Behälter mit Rohrbündeln ausgebildet sind, wobei das jeweilige Adsorbens in einem Innenraum der die Rohrbündel bildenden Rohre eingefüllt ist und der jeweilige Wärmeträgerfluidstrom die Rohre umströmt oder umgekehrt.

Mit anderen Worten kann insbesondere ein Rohrbündelwärmetauscher verwendet werden, in dem ein Adsorbens in den Rohren vorgesehen ist und das Wärmeträgerfluid auf der Mantelseite der Rohre strömt. Insbesondere können in einer derartigen Anordnung, aber auch in den nachfolgend erläuterten Anordnungen mit Rohrbündeln Rohrinnendurchmesser zwischen 2,6 und 4,9 cm oder 10 cm verwendet werden. In der erläuterten Ausgestaltung kann insbesondere auch eine Verwendung von Finnen auf der Rohrinnenseite zur Vergrößerung der Wärmeübertragungsfläche zum Adsorbens hin und somit zum schnelleren Aufheizen bzw. Abkühlen des Adsorbens vorgesehen sein. Grundsätzlich ist jedoch auch möglich, eine entsprechende Rohrbündelanordnung derartig auszugestalten, dass das Wärmeträgerfluid bzw. ein entsprechender Wärmeträgerfluistrom in den Rohren strömt und das Adsorbens auf der Mantelseite bereitgestellt ist. Auch in diesem Fall können zusätzliche Finnen bereitgestellt werden, die in diesem Fall jedoch insbesondere auf der Rohraußenseite angeordnet sind, um die Wärmeübertragungsfläche zum Adsorbens hin zu vergrößern.

Grundsätzlich kann der erfindungsgemäßen Temperaturwechseladsorptionsanlage bzw. kann einem entsprechenden Verfahren auch wenigstens ein weiterer Trennschritt zugeordnet sein. So kann insbesondere ein Restgas, das durch die Temperaturwechseladsorption gemäß der vorliegenden Erfindung gebildet wird, mittels einer Membrananlage bearbeitet werden, um beispielsweise Reste von Kohlendioxid als Permeat auszuschleusen. Ein hierbei gebildetes methanhaltiges Retentat kann auf hohem Druck zum Einsatzgas oder zum Produktgas geführt werden.

Grundsätzlich kann das Wärmeträgerfluid, das im Rahmen der vorliegenden Erfindung in Form von Wärmeträgerfluidströmen verwendet wird, aus Wasser oder Dampf gebildet sein. Alternativ ist auch die Verwendung von insbesondere synthetischen, Thermalölen möglich. Die jeweilige Verwendung richtet sich dabei insbesondere nach den in entsprechenden Anlagen zur erzielenden Temperaturen.

Grundsätzlich können das oder die Adsorbentien im Rahmen der vorliegenden Erfindung beispielsweise in Form von Granulen oder Packungen bereitgestellt sein. In besonderer Weise eigen sich Zeolithe, Aktivkohlen, Silicagele, Alugele oder metallorganische Gerüste.

Gemäß einer besonders bevorzugten Ausgestaltung der vorliegenden Erfindung kann vorgesehen sein, dass durch den ersten und/oder den zweiten und/oder den dritten Wärmetausch hervorgerufene Druckänderungen ausgeglichen werden können. So kann insbesondere ein Heizen mit gleichzeitiger Abfuhr von Gas aus dem oder den jeweiligen Adsorptionseinheiten vorgenommen werden, so dass der Druck in den oder dem Adsorptionseinheiten trotz Desorption und thermischer Ausdehnung konstant gehalten oder abgesenkt werden kann. Entsprechend ist auch eine Kühlung mit gleichzeitiger Zufuhr von Gas in den oder die jeweiligen Adsorptionseinheiten möglich, so dass der Druck in der oder den Adsorptionseinheiten trotz Adsorption von Gas auf dem Adsorbens und Zusammenziehung des Gases aufgrund der sinkenden Temperatur konstant gehalten werden kann oder ansteigt. Dies gilt vor allem, wenn der Adsorptionsraum als geschlossenes System geheizt oder gekühlt wird .(Abkühlung und Adsorption führen in diesem Fall zu einer Druckerniedrigung und Heizen zu einer Druckerhöhung im Adsortionsraum.)

Die vorliegende Erfindung kann auch umfassen, während oder nach der Aufheizung des Adsorbens dieses mit gereinigtem Produkt zu spülen, um die Desorption zu begünstigen. Ein weiterer Aspekt, der im Rahmen der vorliegenden Erfindung verwirklicht werden kann, ist die Erhöhung des Einsatzgasstroms, also des Gasgemischstroms, der in der Anlage bearbeitet wird, während der Phasen Spülen und/oder Druckaufbau, um auf diese Weise einen Einbruch des Produktstroms während dieser Schritte zu verhindern und einen konstanten Produktstrom am Austritt der Anlage zu gewährleisten.

Wie insbesondere auch erwähnt, kann im Rahmen der vorliegenden Erfindung zumindest zeitweise ein Betrieb von mindestens zwei Adsorptionseinheiten gleichzeitig im Adsorptionsmodus, also der ersten Betriebsart, erfolgen, um auf diese Weise insbesondere Konzentrations- und/oder Volumenstromänderungen und/oder Temperaturschwankungen im Produktstrom zu minimieren.

Gemäß einer weiteren Ausgestaltung der vorliegenden Erfindung kann zumindest ein Teil des Restgases in einem Erhitzer verfeuert werden und hierdurch ein Teil des Wärmeträgerfluids bzw. ein entsprechender Wärmeträgerfluidstrom mit zumindest einem Teil der freiwerdenden Wärme erhitzt werden. Dieses Wärmeträgerfluid kann sodann zum indirekten Aufheizen des Adsorbers verwendet werden.

Das Gesamtvolumen aller Pufferbehälter für das Wärmeträgerfluid, das im Rahmen der vorliegenden Erfindung eingesetzt wird, entspricht mindestens dem Gesamtvolumen an Wärmeträgerfluid in den Adsorbern (bezogen auf alle Adsorber zusammen).

Besonders vorteilhaft ist im Rahmen der vorliegenden Erfindung die Nutzung von Dunst- bzw. Kühltürmen mit einem offenen (Wasser-)Kreislauf zur Kühlung des Wärmeträgerfluids. Die Abkühlung des Wärmeträgerfluids findet dabei indirekt dabei über einen Wärmetauscher statt. Alternativ kann auch die Verwendung von Luftkühlern zur Kühlung des Wärmeträgerfluids vorgesehen sein.

Wie erwähnt, schlägt die vorliegende Erfindung auch eine Druckwechseladsorptionsanlage vor, wobei zu deren Merkmalen auf den entsprechenden unabhängigen Patentanspruch verwiesen wird.

Insbesondere zeichnet sich eine derartige Temperaturwechseladsorptionsanlage durch Mittel aus, die sie für einen Betrieb gemäß einem der zuvor erläuterten Verfahren bzw. entsprechender Ausgestaltungen befähigen. Zu weiteren Merkmalen und Vorteilen einer entsprechenden Temperaturwechseladsorptionsanlage sei daher auf die obigen Erläuterungen ausführlich verwiesen.

Die Erfindung wird nachfolgend unter Bezugnahme auf die beigefügte Zeichnungen erläutert, welche eine Ausführungsform der vorliegenden Erfindung veranschaulichen.

### Kurze Beschreibung der Zeichnungen

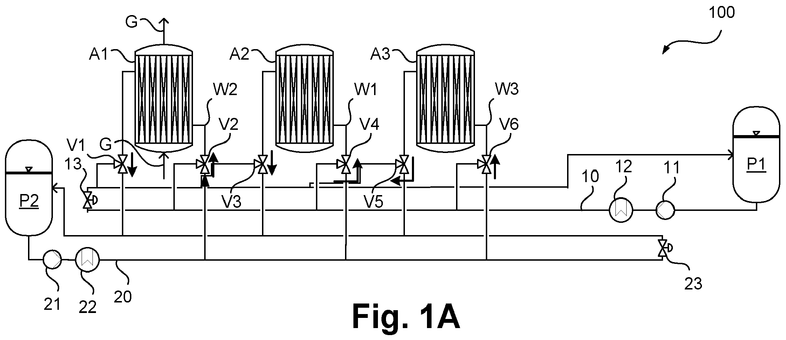

Figur 1A zeigt eine Temperaturwechseladsorptionsanlage gemäß einer Ausführungsform der Erfindung in einem ersten Zeitraum eines Betriebstakts.

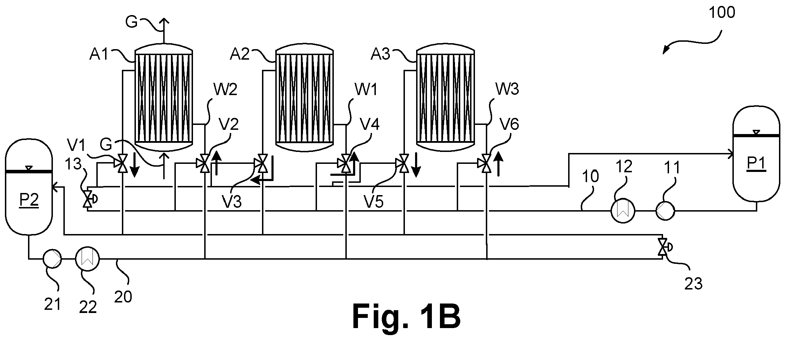

Figur 1B veranschaulicht die Anlage gemäß Figur 1A in einem zweiten Zeitraum des in Figur 1A dargestellten Betriebstakts.

### Ausführliche Beschreibung der Zeichnungen

In Figur 1A ist eine Temperaturwechseladsorptionsanlage 100 gemäß einer Ausführungsform der vorliegenden Erfindung in einem ersten Zeitraum eines Betriebstakts veranschaulicht.

Wesentliche Komponenten der Temperaturwechseladsorptionsanlage 100 sind eine erste Adsorptionseinheit A1, eine zweite Adsorptionseinheit A2 und eine dritte Adsorptionseinheit A3. Wie erläutert ist die vorliegende Erfindung jedoch nicht auf die Verwendung von nur oder genau drei Adsorptionseinheiten beschränkt.

In der in Figur 1A dargestellten Momentaufnahme wird die erste Adsorptionseinheit A1 in der zuvor ausführlich erläuterten ersten Betriebsart, betrieben, es erfolgt also eine Trennung eines Gasgemischstroms, der hier mit G bezeichnet ist und der hierzu einem adsorptiven Stoffaustausch unterworfen wird. In der in Figur 1A dargestellten Momentaufnahme wird ferner die zweite Adsorptionseinheit A2 aufgeheizt, um adsorbierte Komponenten zu desorbieren, sie wird also in der oben ausführlich erläuterten zweiten Betriebsart betrieben. Die dritte Adsorptionseinheit A3 wird hingegen zum dargestellten Zeitpunkt gekühlt, um sie für eine Verwendung zur Trennung eines Gasgemischstroms (des Gasgemischstroms G, der in dem dargestellten Betriebstakt die erste Adsorptionseinheit A1 durchströmt) vorzubereiten.

Sie wird also in der ersten Betriebsart betrieben. Die Momentaufnahme entspricht beispielsweise einem Betriebstakt eines entsprechenden Verfahrens.

In einem nächsten Betriebstakt kann die in dem veranschaulichten Betriebstakt abgekühlte Adsorptionseinheit A3 für die Adsorption verwendet, also dann in der ersten Betriebsart betrieben werden, die entsprechend zuvor regenerierte Adsorptionseinheit A2 kann hingegen abgekühlt, also dann in der dritten Betriebsart betrieben werden, und die zuvor zur Adsorption verwendete Adsorptionseinheit A1 kann erwärmt, also in der zweiten Betriebsart betrieben werden.

Wie in Figur 1A, mit anderen Worten, veranschaulicht, wird die erste Adsorptionseinheit A1 derart betrieben, dass durch einen Adsorptionsraum dieser ersten Adsorptionseinheit ein Gasgemischstrom G geführt und einem adsorptiven Stoffaustausch mit wenigstens einem Adsorbens in dem Adsorptionsraum der ersten Adsorptionseinheit unterworfen wird. Hierbei erfolgt eine zumindest teilweise Abtrennung der stärker bzw. bevorzugt adsorbierbaren Komponenten.

Ferner wird ein erster Wärmeträgerfluidstrom, hier mit W1 bezeichnet, auf einem ersten Temperaturniveau durch eine Wärmetauschanordnung der zweiten Adsorptionseinheit A2 geführt und dabei einem indirekten Wärmetausch mit wenigstens einem Adsorbens in einem Adsorptionsraum der zweiten Adsorptionseinheit A2 unterworfen. Dabei wird Wärme von dem ersten Wärmeträgerfluidstrom W1 indirekt auf das wenigstens eine Adsorbens übertragen. Hierdurch erfolgt ein Aufheizen des wenigstens einen Adsorbens.

Ferner wird im dargestellten Beispiel ein zweiter Wärmeträgerfluidstrom, hier mit W2 bezeichnet, auf einem zweiten Temperaturniveau durch eine Wärmetauschanordnung in der ersten Adsorptionseinheit A1 geführt und dabei einem indirekten Wärmetausch mit dem wenigstens einen dort vorliegenden Adsorbens unterworfen, um Adsorptionswärme abzuführen. Es wird also Wärme von dem wenigstens einen Adsorbens indirekt auf den zweiten Wärmeträgerfluidstrom W2 übertragen.

Ein dritter Wärmeträgerfluidstrom, hier mit W3 bezeichnet, wird auf einem dritten Temperaturniveau, das dem zweiten Temperaturniveau entsprechen kann, durch eine Wärmetauschanordnung in der dritten Adsorptionseinheit A3 geführt und dabei einem indirekten Wärmetausch mit wenigstens einem Adsorbens in einem Adsorptionsraum der dritten Adsorptionseinheit unterworfen. Es wird also Wärme von dem wenigstens einen Adsorbens indirekt auf den dritten Wärmeträgerfluidstrom W2 übertragen.

Wie in Figur 1A veranschaulicht, sind in der Temperaturwechseladsorptionsanlage 100 ein erster ("warmer") Wärmeträgerfluidkreislauf 10 und ein zweiter ("kalter") Wärmeträgerfluidkreislauf 20 bereitgestellt. Diese Wärmeträgerfluidkreisläufe 10, 20 sind jeweils mit einem ersten ("warmen") Pufferbehälter P1 bzw. einem zweiten ("kalten") Pufferbehälter P2 gekoppelt.

Wie jeweils mit entsprechend fett gedruckten Pfeilen veranschaulicht, wird dabei in einem in Figur 1A dargestellten ersten Zeitraum, aber auch in einem in Figur 1 B veranschaulichten zweiten Zeitraum der erste Wärmeträgerfluidstrom W1 auf dem ersten Temperaturniveau zumindest teilweise dem ersten Pufferbehälter P1 entnommen und danach wie erläutert in der zweiten Adsorptionseinheit A2 eingesetzt.

Ferner wird der zweite Wärmeträgerfluidstrom W2 auf dem zweiten Temperaturniveau, das unterhalb des ersten Temperaturniveaus liegt, zumindest teilweise dem zweiten Pufferbehälter P2 entnommen und danach wie erläutert in der ersten Adsorptionseinheit A1 eingesetzt.

Der dritte Wärmeträgerfluidstrom W3 wird auf dem dritten Temperaturniveau, das, wie mehrfach erwähnt, dem zweiten Temperaturniveau entsprechen kann, zumindest teilweise dem zweiten Pufferbehälter entnommen und danach wie erläutert in der dritten Adsorptionseinheit A3 eingesetzt.

Die in den Figuren 1A und 1B jeweils mit fett gedruckten Pfeilen veranschaulichten Fluidwege können insbesondere durch hier symbolisch veranschaulichte Dreiwegeventile V1 bis V6 eingestellt werden. Die Flussrichtung innerhalb der Adsorptionseinheiten A1 bis A3 kann dabei, wie eingezeichnet, von oben nach unten sein, aber auch von unten nach oben. In die entsprechenden Wärmeträgerfluidkreisläufe 10 und 20 sind ferner jeweils eine Pumpe 11 bzw. 21 sowie ein Wärmetauscher 12 und 22 integriert. Eine strömende Fluidmenge kann insbesondere über ein Ventil 13 bzw. 23 eingestellt werden.

Wie aus der Zusammenschau der Figuren 1A und 1B ersichtlich wird, wie mit den fett gedruckten Pfeilen veranschaulicht, der erste Wärmeträgerfluidstrom W1 stromab der zweiten Adsorptionseinheit A2 zumindest teilweise dem zweiten Pufferbehälter P2 zugeführt, hingegen in dem zweiten Zeitraum, der in Figur 1B veranschaulicht ist, zumindest teilweise dem ersten Pufferbehälter P1.

Der zweite Wärmeträgerfluidstrom W2 wird nach stromab ersten Adsorptionseinheit A1 dagegen vorzugsweise sowohl in den ersten als auch in dem zweiten Zeitraum gemäß Figuren 1A und 1B zumindest teilweise dem zweiten Pufferbehälter P2 zugeführt.

Schließlich wird der dritte Wärmeträgerfluidstrom W3 stromab der dritten Adsorptionseinheit A3 in dem ersten Zeitraum, der in Figur 1A dargestellt ist, zumindest teilweise dem ersten Pufferbehälter P1 zugeführt, hingegen in dem zweiten Zeitraum zumindest teilweise dem zweiten Pufferbehälter P2.

Die Einspeisung bzw. Abfuhr der entsprechenden Fluide erfolgt über die jeweiligen Fluidkreisläufe 10 und 20 mit den veranschaulichten weiteren technischen Einrichtungen. Die jeweiligen Vorteile der erläuterten Maßnahmen wurden bereits zuvor ausführlich diskutiert.

## Patentansprüche

1. Verfahren zur Trennung eines Gasgemischstroms, bei dem eine Temperaturwechseladsorptionsanlage (100) verwendet wird, die eine Anzahl von Adsorptionseinheiten (A1, A2, A3) aufweist, die jeweils in einer ersten Betriebsart und einer zweiten Betriebsart betrieben werden, wobei
- die erste Betriebsart umfasst, den Gasgemischstrom (G) zumindest teilweise durch einen Adsorptionsraum der jeweiligen Adsorptionseinheit (A1, A2, A3) zu führen und einem adsorptiven Stoffaustausch mit wenigstens einem Adsorbens in deren Adsorptionsraum zu unterwerfen, und
- die zweite Betriebsart umfasst, einen ersten Wärmeträgerfluidstrom (W1) auf einem ersten Temperaturniveau durch eine Wärmetauschanordnung der jeweiligen Adsorptionseinheit (A1, A2, A3) zu führen und Wärme von dem ersten Wärmeträgerfluidstrom (W1) indirekt auf das wenigstens eine Adsorbens in deren Adsorptionsraum zu übertragen,
**dadurch gekennzeichnet, dass**
- die erste Betriebsart umfasst, einen zweiten Wärmeträgerfluidstrom (W2) auf einem zweiten Temperaturniveau durch die Wärmetauschanordnung der jeweiligen Adsorptionseinheit (A1, A2, A3) zu führen und Wärme von dem wenigstens einen Adsorbens in deren Adsoroptionsraum indirekt auf den zweiten Wärmeträgerfluidstrom (W1) zu übertragen, und
- die Adsorptionseinheiten (A1, A2, A3) jeweils in einer dritten Betriebsart betrieben werden, die umfasst, einen dritten Wärmeüberträgerfluidstrom (W3) auf einem dritten Temperaturniveau durch die Wärmetauschanordnung der jeweiligen Adsorptionseinheit (A1, A2, A3) zu führen und Wärme von dem wenigstens einen Adsorbens in deren Adsorptionsraum indirekt auf den dritten Wärmeträgerfluidstrom (W3) zu übertragen.

2. Verfahren nach Anspruch 1, bei dem das zweite Temperaturniveau unterhalb des ersten Temperaturniveaus liegt und bei dem das dritte Temperaturniveau dem zweiten Temperaturniveau entspricht, wobei
- der erste Wärmeträgerfluidstrom (W1) in der zweiten Betriebsart auf dem ersten Temperaturniveau zumindest teilweise einem ersten Pufferbehälter (P1) entnommen und danach durch die Wärmetauschanordnung der jeweiligen Adsorptionseinheit (A1, A2, A3) geführt wird,
- der zweite Wärmeträgerfluidstrom (W2) in der ersten Betriebsart auf dem zweiten Temperaturniveau zumindest teilweise einem zweiten Pufferbehälter (P2) entnommen und danach durch die Wärmetauschanordnung der jeweiligen Adsorptionseinheit (A1, A2, A3) geführt wird, und
- der dritte Wärmeträgerfluidstrom (W3) in der dritten Betriebsart auf dem zweiten Temperaturniveau zumindest teilweise dem zweiten Pufferbehälter (P2) entnommen und danach durch die Wärmetauschanordnung der jeweiligen Adsorptionseinheit (A1, A2, A3) geführt wird.

3. Verfahren nach Anspruch 1 oder 2, bei dem
- der erste Wärmeträgerfluidstrom (W1), nachdem er in der zweiten Betriebsart durch die Wärmetauschanordnung der jeweiligen Adsorptionseinheit (A1, A2, A3) geführt wurde, in einem ersten Zeitraum zumindest teilweise dem zweiten Pufferbehälter (P2) und in einem zweiten Zeitraum nach dem ersten Zeitraum zumindest teilweise dem ersten Pufferbehälter (P1) zugeführt wird, und/oder
- der dritte Wärmeträgerfluidstrom (W3), nachdem er in der dritten Betriebsart durch die Wärmetauschanordnung der jeweiligen Adsorptionseinheit (A1, A2, A3) geführt wurde, in einem ersten Zeitraum zumindest teilweise dem ersten Pufferbehälter (P1) und in einem zweiten Zeitraum nach dem ersten Zeitraum zumindest teilweise dem zweiten Pufferbehälter (P2) zugeführt wird.

4. Verfahren nach Anspruch 1, bei dem der erste Wärmeträgerfluidstrom (W1), nachdem er in dem zweiten Betriebsmodus durch die Wärmetauschanordnung der jeweiligen Adsorptionseinheit (A1, A2, A3) geführt wurde, und/oder der zweite Wärmeträgerfluidstrom (W2), nachdem er in dem ersten Betriebsmodus durch die Wärmetauschanordnung der jeweiligen Adsorptionseinheit (A1, A2, A3) geführt wurde, und/oder der dritte Wärmeträgerfluidstrom (W3), nachdem er in dem dritten Betriebsmodus durch die Wärmetauschanordnung der jeweiligen Adsorptionseinheit (A1, A2, A3) geführt wurde, zumindest teilweise einer Vermischung zugeführt werden.

5. Verfahren nach einem der vorstehenden Ansprüche, bei dem der Adsorptionsraum der jeweiligen Adsorptionseinheiten (A1, A2, A3) in der zweiten Betriebsart und/oder in der dritten Betriebsart zumindest zeitweise mit einem zirkulierenden Gasstrom durchströmt wird, der mittels eines Gebläses befördert wird.

6. Verfahren nach einem der vorstehenden Ansprüche, bei dem aus dem Adsorptionsraum der jeweiligen Adsorptionseinheiten (A1, A2, A3) zu Beginn der zweiten Betriebsart Gas ausgeführt und in das Verfahren zurückgeführt wird.

7. Verfahren nach einem der vorstehenden Ansprüche, bei dem aus dem Adsorptionsraum der jeweiligen Adsorptionseinheiten (A1, A2, A3) während zumindest eines Teils der zweiten Betriebsart Gas ausgeführt und in einen Pufferbehälter überführt wird.

8. Verfahren nach einem der vorstehenden Ansprüche, bei dem der Gasgemischstrom einen Gehalt von 0,01 bis 20 Mol-% an einer oder mehrerer an das wenigstens eine Adsorbens bevorzugt adsorbierender Komponenten und im verbleibenden Rest eine oder mehrere weniger stark an das wenigstens eine Adsorbens adsorbierende Komponenten enthält.

9. Verfahren nach Anspruch 8, bei dem die eine oder die mehreren bevorzugt adsorbierenden Komponenten Kohlendioxid und/oder Wasser und/oder Kohlenwasserstoffe mit mehr als zwei oder mehr als drei Kohlenstoffatomen umfassen und bei dem die eine oder die mehreren weniger stark adsorbierbaren Komponenten Wasserstoff und/oder Methan und/oder Kohlenmonoxid umfassen.

10. Verfahren nach Anspruch 8, bei dem die eine oder die mehreren bevorzugt adsorbierenden Komponenten Wasser und/oder Kohlenwasserstoffe umfassen und bei dem die eine oder die mehreren weniger stark adsorbierenden Komponenten Kohlendioxid umfassen.

11. Verfahren nach einem der vorstehenden Ansprüche, bei dem die Adsorptionseinheiten (A1, A2, A3) als Behälter mit Rohrbündeln ausgebildet sind, wobei das jeweilige Adsorbens in einem Innenraum der die Rohrbündel bildenden Rohre eingefüllt ist und der jeweilige Wärmeträgerfluidstrom (W1, W2, W3) die Rohre umströmt oder umgekehrt.

12. Verfahren nach einem der vorstehenden Ansprüche, bei dem der erste, der zweite und der dritte Wärmeträgerfluidstrom (W1, W2, W3) Wasser, Dampf oder Thermalöl umfassen.

13. Verfahren nach einem der vorstehenden Ansprüche, bei dem das erste, das zweite und das dritte Adsorbens identisch ausgebildet sind.

14. Verfahren nach einem der vorstehenden Ansprüche, bei dem durch den ersten und/oder den zweiten und/oder den dritten Wärmetausch hervorgerufene Druckänderungen im Adsorptionsraum ausgeglichen werden.

15. Temperaturwechseladsorptionsanlage (100) zur Trennung eines Gasgemischstroms, mit einer Anzahl von Adsorptionseinheiten (A1, A2, A3) aufweist, die jeweils für einen Betrieb in einer ersten und einer zweiten Betriebsart eingerichtet sind, wobei Mittel vorgesehen sind, die dafür eingerichtet sind,
- in der ersten Betriebsart, den Gasgemischstrom (G) zumindest teilweise durch einen Adsorptionsraum der jeweiligen Adsorptionseinheit (A1, A2, A3) zu führen und einem adsorptiven Stoffaustausch mit wenigstens einem Adsorbens in deren Adsorptionsraum zu unterwerfen, und
- in der zweiten Betriebsart, einen ersten Wärmeträgerfluidstrom (W1) auf einem ersten Temperaturniveau durch eine Wärmetauschanordnung der jeweiligen Adsorptionseinheit (A1, A2, A3) zu führen und Wärme von dem ersten Wärmeträgerfluidstrom (W1) indirekt auf das wenigstens eine Adsorbens in deren Adsorptionsraum zu übertragen,
**gekennzeichnet durch** Mittel, die dafür eingerichtet sind,
- in der ersten Betriebsart einen zweiten Wärmeträgerfluidstrom (W2) auf einem zweiten Temperaturniveau durch die Wärmetauschanordnung der jeweiligen Adsorptionseinheit (A1, A2, A3) zu führen und Wärme von dem wenigstens einen Adsorbens in deren Adsoroptionsraum indirekt auf den zweiten Wärmeträgerfluidstrom (W1) zu übertragen, und
- die Adsorptionseinheiten (A1, A2, A3) jeweils in einer dritten Betriebsart zu betreiben, die umfasst, einen dritten Wärmeüberträgerfluidstrom (W3) auf einem dritten Temperaturniveau durch die Wärmetauschanordnung der jeweiligen Adsorptionseinheit (A1, A2, A3) zu führen und Wärme von dem wenigstens einen Adsorbens in deren Adsorptionsraum indirekt auf den dritten Wärmeträgerfluidstrom (W3) zu übertragen.
